(19) Europäisches Patentamt
European Patent Office
Office européen des brevets

(11) EP 3 103 847 A1

(12) **EUROPÄISCHE PATENTANMELDUNG**

(43) Veröffentlichungstag:
**14.12.2016 Patentblatt 2016/50**

(51) Int Cl.:
***C09J 5/02*** (2006.01) ***C09J 4/00*** (2006.01)
***E04B 1/68*** (2006.01)

(21) Anmeldenummer: **15171397.1**

(22) Anmeldetag: **10.06.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(71) Anmelder: **Sika Technology AG**
**6340 Baar (CH)**

(72) Erfinder:
- **Haufe, Markus**
  **8048 Zürich (CH)**
- **Hug, Max**
  **8038 Zürich (CH)**

(74) Vertreter: **Sika Patent Attorneys**
**c/o Sika Technology AG**
**Corp. IP Dept.**
**Tüffenwies 16**
**Postfach**
**8048 Zürich (CH)**

(54) **VERBINDUNG VON FUGENBÄNDERN**

(57) Die vorliegende Erfindung betrifft ein Verfahren zum Verbinden von Fugenbändern, umfassend das Aufbringen einer Zusammensetzung, die mindestens ein latentes Alkylboran umfasst und im Wesentlichen frei von Dekomplexierungsmittel für das latente Alkylboran ist, auf ein Fugenbandsubstrat (1), das Aufbringen eines radikalisch härtbaren Klebstoffs auf das mit dem latenten Alkylboran vorbehandelte Fugenbandsubstrat (1), das Inkontaktbringen des Fugenbandsubstrats (1) mit einem Fugenbandsubstrat (2), derart, dass der radikalisch härtbare Klebstoff zwischen den beiden Substraten angeordnet ist, und das Aushärtenlassen des radikalisch härtbaren Klebstoffs unter Bildung einer Kompositstruktur. Das erfindungsgemäße Verfahren eignet sich insbesondere für die Verklebung von Fugenbändern auf Basis von elastischen und thermoplastischen Substraten, wie EPDM oder SBR, aber auch für eine Verklebung von PVC-Fugenbändern. Entsprechend verklebte Fugenbänder zeichnen sich durch eine günstige Widerstandsfähigkeit des Klebstoffs gegenüber alkalischen Medien aus, wobei konventionelle Klebstoffe zum Einsatz kommen können, die optimierte Eigenschaften hinsichtlich ihrer Lagerstabilität, ihrer Offenzeit und Aushärtungszeit aufweisen.

EP 3 103 847 A1

## Beschreibung

Die vorliegende Erfindung betrifft ein Verfahren zum Verbinden von Fugenbändern, umfassend a) das Aufbringen einer Zusammensetzung, die mindestens ein latentes Alkylboran umfasst und im Wesentlichen frei von Dekomplexierungsmitteln für das latente Alkylboran ist, auf ein Fugenbandsubstrat (1), b) das Aufbringen eines radikalisch härtbaren Klebstoffs auf das mit dem latenten Alkylboran vorbehandelte Fugenbandsubstrat (1), c) das Inkontaktbringen des Fugenbandsubstrats (1) aus b) mit einem Fugenbandsubstrat (2) derart, dass der radikalisch härtbare Klebstoff zwischen den beiden Substraten angeordnet ist, und d) das Aushärtenlassen des radikalisch härtbaren Klebstoffs unter Bildung einer Kompositstruktur. Die vorliegende Erfindung betrifft ebenfalls nach dem vorstehend beschriebenen Verfahren verklebte Fugenbänder.

Durch die Behandlung von Fugenbandsubstraten, die, wie beispielsweise EPDM oder SBR, ungesättigte Einheiten enthalten, mit einem latenten Alkylboran wird eine anschließende Verbindung eines radikalisch härtbaren Klebstoffs mit der Oberfläche dieser Substrate wesentlich begünstigt, so dass das Verfahren insbesondere zur Verklebung von Fugenbandsubstraten auf Basis von Fuganbandmaterialien, die ungesättigte Einheiten aufweisen, eingesetzt werden kann.

## Stand der Technik

Fugenbänder werden im Zusammenhang mit Betonbauwerken zur Abdichtung gegenüber dem Eindringen von Wasser eingesetzt. Um eine vollständige Abdichtung zu gewährleisten, müssen einzelne Fugenbandenden verbunden werden, wobei in der Regel eine Verbindung durch Schweißen mittels elektrisch erwärmbarer Heizspiegel zum Einsatz kommt. Ein Problem bei einem Verschweißen von Fugenbändern besteht jedoch darin, dass diese Verfahren relativ zeitaufwändig und kompliziert sind und eine gewisse Infrastruktur, z.B. in Form von Schweißgeräten und benötigtem Strom, erforderlich ist. Zudem ist ein Verschweißen von Fugenbändern relativ fehleranfällig, so dass die Verbindung durch geschultes Personal vorgenommen werden muss.

Ein weiteres Problem besteht darin, dass unterschiedliche Fugenbandmaterialien unterschiedlich gut schweißbar sind, so dass der Erfolg der Verbindung auch vom eingesetzten Material abhängt. Vordem Hintergrund dieser Probleme besteht ein Bedarf nach einem Verfahren zur Verbindung von Fugenbändern, das relativ einfach und schnell ausführbar ist und mit einfachen Mitteln umgesetzt werden kann.

Während sich die Verwendung von Klebesystemen zur Verbindung von gleichen oder verschiedenen Substraten im Stand der Technik bereits bewährt hat, besteht insbesondere bei elastischen Substraten mit geringer Oberflächenspannung häufig das Problem einer unzureichenden Anbindung und Haftung von aufgebrachten Klebstoffen an das Substrat. Speziell Materialien auf Basis von ungesättigten Einheiten, wie Elastomere, z.B. in Form von EPDM, NBR oder SBR, haben sich als relativ schwer zu verklebende Substrate herausgestellt, da die meisten Klebstoffe und insbesondere viele Acrylatklebstoffe nur unzureichend auf diesen Materialien haften.

Aus diesen Gründen hat sich bisher kein Verfahren zur Verbindung von Fugenbändern etabliert, das auf einem Klebesystem beruht. Als Probleme können in diesem Zusammenhang auch die erforderliche Schnelligkeit der Aushärtung und die Beständigkeit bei hohen pH-Werten angeführt werden, da Fugenbänder im Laufe weiterer Verarbeitungsprozesse häufig in Kontakt mit frischem (und somit stark alkalischem) Beton und mit stark alkalischer Betonporenflüssigkeit kommen.

Die vorliegende Erfindung befasst sich mit diesen Problemen.

## Beschreibung der Erfindung

Ein erster Aspekt der vorliegenden Erfindung betrifft ein Verfahren zum Verbinden von Fugenbändern, umfassend a) das Aufbringen einer Zusammensetzung, die mindestens ein latentes Alkylboran umfasst und im Wesentlichen frei von Dekomplexierungsmitteln für das latente Alkylboran ist, auf ein Fugenbandsubstrat (1), b) das Aufbringen eines radikalisch härtbaren Klebstoffs auf das mit dem latenten Alkylboran vorbehandelte Fugenbandsubstrat (1), c) das Inkontaktbringen des Fugenbandsubstrats (1) aus b) mit einem Fugenbandsubstrat (2) derart, dass der radikalisch härtbare Klebstoff zwischen den beiden Substraten angeordnet ist, d) das Aushärtenlassen des radikalisch härtbaren Klebstoffs unter Bildung einer Kompositstruktur.

Wenn im Vorstehenden davon die Rede ist, dass die Zusammensetzung im Wesentlichen frei von Dekomplexierungsmitteln für das latente Alkylboran ist, so ist dies dahingehend aufzufassen, dass die Zusammensetzung vorzugsweise weniger als 5 Gew.-%, besonders bevorzugt weniger als 2 Gew.-% und ganz besonders bevorzugt keine nachweisbaren Mengen an Dekomplexierungsmitteln aufweist.

Ein "Dekomplexierungsmittel", wie dieser Begriff hier verwendet wird, ist eine Verbindung, die bei Kontakt mit dem latenten Alkylboran dieses in ein aktives Alkylboran umwandelt, beispielsweise indem sich aus einem Alkylboranamin-Komplex unter Freisetzung von Alkylboran ein Addukt aus dem Dekomplexierungsmittel mit dem Amin bildet.

Nach Reaktion mit dem Dekomplexierungsmittel entsteht ein Alkylboran, das unter Polymerisationsbedingungen als freies Radikal vorliegt oder solche generiert. Für Beispiele geeigneter Dekomplexierungsmittel wird auf die folgenden Ausführungen verwiesen.

Unter einem latenten Alkylboran ist im Rahmen der vorliegenden Erfindung ein Alkylboran zu verstehen, das in einer Form vorliegt, bei der eine Bildung von Radikalen nicht begünstigt wird. Dies kann beispielsweise der Fall sein, indem die vierte Koordinationsstelle des Bors nicht durch einen Substituenten blockiert ist, sondern beispielsweise das freie Elektronenpaar eines Stickstoffs oder Sauerstoffs bindet. Das latente Alkylboran liegt vorzugsweise in tetrakoordinierter Struktur vor. Aus dem latenten Alkylboran kann sich eine aktive Spezies beispielsweise durch Abdissoziation eines Liganden bilden, wobei am Bor eine freie Koordinationsstelle entsteht.

In einer bevorzugten Ausführungsform des vorstehend beschriebenen Verfahrens handelt es sich bei dem Fugenbandsubstrat um ein PVC-, EPDM-, NBR- oder SBR-Substrat, oder um ein Substrat aus Gemischen dieser Materialien wie PVC/NBR. Besonders geeignete Substrate sind EPDM-, NBR- oder SBR-Substrate. Wenn im Vorstehenden von PVC-, EPDM-, NBR- oder SBR-Substraten die Rede ist, so ist dies so zu verstehen, dass das genannte Material die thermoplastische oder elastische Basis des Substrats bildet, aber neben diesem Material noch andere Bestandteile wie Füllstoffe, Weichmacher, etc. enthalten sein können. Das Substrat sollte darüber hinaus zweckmäßig ein E-Modul, bestimmt gemäß DIN 53457, von < 1000 MPa, bevorzugt im Bereich von 1 bis 250 MPa und besonders bevorzugt 5 bis 60 MPa, aufweisen.

Es ist weiterhin bevorzugt, wenn das Fugenbandsubstrat aus den genannten Materialien sowie üblichen Zusatzstoffen für solche Materialien (z.B. Weichmacher bei PVC oder Farbmitteln und Füllstoffen) besteht.

Im Rahmen des beschriebenen Verfahrens ist es zweckmäßig, die Zusammensetzung mit dem latenten Alkylboran vor dem Schritt c) auch auf das Fugenbandsubstrat (2) aufzubringen wird, um auch dort die Anbindung des radikalisch härtbaren Klebstoffs zu verbessern.

Bei dem radikalisch härtbaren Klebstoff handelt es sich insbesondere um einen Klebstoff auf Basis von Acrylaten, Styrol oder Alkylstyrolen oder ungesättigten Polyestern. In einer bevorzugten Ausführungsform handelt es sich bei dem radikalisch härtbaren Klebstoff um einen Acrylat-basierten Klebstoff, d.h. einen Klebstoff auf Basis von (Meth)acrylaten. Es hat sich gezeigt, dass kommerziell verfügbare Acrylatklebstoffe, wenn sie im vorstehend geschilderten Verfahren eingesetzt werden, eine gute Verbindung zu Fugenbandsubstraten gewährleisten. Im Gegensatz dazu wird bei Klebstoffen, deren Härtung nicht auf einem radikalischen Prozess beruht (wie beispielsweise Polyurethan oder Epoxyklebstoffen), keine Verbesserung der Adhäsion durch das Vorbehandeln mit einer Zusammensetzung, umfassend mindestens ein latentes Alkylboran, beobachtet.

Ohne an eine bestimmte Theorie gebunden zu sein, wird angenommen, dass durch das Auftragen des latenten Alkylborans, insbesondere auf Substrate, die ungesättigte Einheiten, z.B. in Form von C=C-Doppelbindungen, enthalten (beispielsweise EPDM- oder SBR-Substrate), die ungesättigten Einheiten mit der aktiven Spezies des Alkylboran oder mit durch die aktive Spezies generierten Radikalen reagieren und somit das Substrat in die Polymerisation des radikalisch härtbaren Klebstoffs eingebunden wird.

Im Rahmen der vorliegenden Erfindung enthält die Zusammensetzung mindestens ein latentes Alkylboran. Dieses latente Alkylboran ist in der Lage, trivalente Alkylborane zu bilden.

Bevorzugte latente Alkylborane sind tetravalente Verbindungen, die vier Bindungen zum Bor aufweisen, von denen drei kovalent sind und eine in Form einer elektronischen Assoziation mit einem Elektronendonor, vorzugsweise einem Amin, vorliegt. Aus dem Komplex bildet sich eine freie Radikale generierende Spezies in Form eines trivalenten Alkylborans. Diese Reaktion wird begünstigt, wenn das latente Alkylboran mit einer weiteren Substanz in Kontakt kommt, die im Folgenden als Dekomplexierungsmittel oder Initiator bezeichnet wird. Die freie Radikale generierende Spezies erzeugt freie Radikale durch Reaktion mit Sauerstoff aus der Umgebung.

Bevorzugte latente Alkylborane sind Alkylborate (z.B. Alkylboratsalze) oder Alkylborankomplexe (beispielsweise Alkylboranaminkomplexe). Ein Alkylborat ist ein Salz eines positiven Kations und eines anionischen tetravalenten Bors. Jedes Alkylborat, das bei Kontakt mit einem Dekomplexierungsmittel in ein Alkylboran umgewandelt werden kann, kann im Rahmen der vorliegenden Erfindung eingesetzt werden. Eine Klasse bevorzugter Alkylborate (ebenfalls bekannt unter der Bezeichnung quartäre Borsalze) wird beispielsweise in Kneafsey et al., US 2003/0226472, und Kneafsey et al., US 2004/0068067, offenbart, die beide hiermit durch Bezugnahme eingeschlossen sein sollen.

In einer weiteren Ausführungsform ist das Alkylborat ein intern blockiertes Borat, wie es beispielsweise in Kendall et al., US 6,630,555, beschrieben wird, und welches hiermit durch Bezugnahme eingeschlossen ist. In diesem Dokument sind vierfach koordinierte intern blockierte Borate beschrieben, wobei das Bor-Atom Teil einer Ringstruktur ist, die weiterhin Oxa- und Thio-Funktionalitäten aufweist. Der Begriff "intern blockiert" bezeichnet im Zusammenhang mit Alkylboraten, wie sie hier beschrieben sind, eine vierfach koordinierte Bor-Spezies, die Teil einer internen Ringstruktur, die zwei der vier Borkoordinationsstellen umfasst, ist. Die interne Blockierung schließt eine Struktur mit einem oder mehreren Ringen ein, wobei das Bor-Atom Teil von Strukturen mit einem oder mehreren Ringen ist.

Besonders bevorzugte Borate sind im Rahmen der vorliegenden Erfindung die Alkalimetallsalze, insbesondere die Kaliumsalze, von Tri-N-butylbortertbutylat, Tri-sec-butylbortertbutylat sowie von Diethylisopropyloxybortertbutylat.

Ein weiteres bevorzugtes Borat ist das Lithium Tri-sec-butylborhydrid, das beispielsweise unter dem Handelsnamen Calselect® LI von BASF erhältlich ist.

Weitere im Rahmen der vorliegenden Erfindung zweckmäßig einzusetzende latente Alkylborane sind Dialkylbor-Verbindungen, wie beispielsweise das Diethylmethoxyboran, das Diethylisopropyloxyboran, der Methylaminoethanolkomplex des Diethylisopropyloxyborans sowie das Methylaminoethoxydicyclohexylboran.

In einer bevorzugten Ausführungsform liegt das latente Alkylboran in Form eines Alkylboranaminkomplexes vor. In diesem Fall ist die freie Radikale generierende Spezies ein Trialkylboran oder ein Alkylcycloalkylboran (d.h. der Alkylboranaminkomplex kann ein Trialkylboran oder ein Alkylcycloalkylboran enthalten). Bevorzugte derartige Borane entsprechen der Formel $B\text{-}(R^1)_3$, wobei B für Bor steht und $R^1$ unabhängig voneinander eine $C_1$-$C_{10}$-Alkylgruppe oder eine $C_3$-$C_{11}$-Cycloalkylgruppe sein kann oder zwei oder mehrere von $R^1$ in Form eines cycloaliphatischen Rings vorliegen können. Vorzugsweise ist $R^1$ eine $C_1$-$C_6$-Alkylgruppe, besonders bevorzugt eine $C_1$-$C_4$-Alkylgruppe und am meisten bevorzugt eine $C_1$-$C_3$-Alkylgruppe. Unter den bevorzugten Alkylboranen sind Triethylboran, Triisopropylboran und Tri-N-butylboran. Wenn das latente Alkylboran als Alkylboranaminkomplex vorliegt, ist das Alkylboran ein trivalentes Alkylboran, während das Amin jedes Amin sein kann, das reversibel mit dem Boran einen Komplex bildet.

Im Rahmen dieser Erfindung verwendbare Alkylboranaminkomplexe weisen die allgemeine Formel $B(\text{-}R^1)_3AM$ auf, wobei $R^1$ unabhängig voneinander eine $C_1$-$C_{11}$-Alkyl- oder $C_3$-$C_{10}$-Cycloalkylgruppe sein kann, oder wobei mehrere $R^1$ einen cycloaliphatischen Ring bilden können. Vorzugsweise ist $R^1$ eine $C_{1\text{-}6}$-Alkylgruppe, besonders bevorzugt $C_1$-$C_4$-Alkylgruppe, und am meisten bevorzugt $C_2$-$C_4$-Alkylgruppe. Besonders bevorzugte Alkylborane sind beispielsweise das Triethylboran, das Triisopropylboran und das Tri-n-butylboran. Von diesen sind die Borane mit längerkettigen Alkylresten wie das Tri-n-butylboran am meisten bevorzugt. AM steht für einen Amin-Rest.

Das Amin, das gemäß der vorliegenden Erfindung im Alkylboranaminkomplex gebunden ist, kann jedes Amin oder jede Mischung von Aminen sein, die mit dem Alkylboran einen Komplex bilden, wobei der Komplex gespalten werden kann. Diese Spaltung kann spontan ablaufen, sie kann jedoch auch durch Zugabe eines Dekomplexierungsmittels oder durch erhöhte Temperaturen beschleunigt werden. Die Attraktivität der Verwendung eines bestimmten Amins in einem Alkylboranaminkomplex kann aus der Energiedifferenz zwischen dem Lewis-Säure-Base-Komplex und der Summe der Energien der isolierten Lewis-Säuren (Alkylboran) und Basen (Amin), bekannt als Bindungsenergie, berechnet werden, wie dies beispielsweise in Jialanella et al., US 7, 247,596, Sp. 5, Z. 60 bis Sp. 6, Z. 28, offenbart ist. Darüber hinaus ist auch das toxische Potential des Amins zu beachten.

$$\text{Bindungsenergie} = -\left[\text{Komplexenergie} - (\text{Energie der Lewis-Säure} + \text{Energie der Lewis-Base})\right]$$

Bevorzugte Amine beinhalten Ammoniak, primäre oder sekundäre Amine, oder Polyamine, die primäre oder sekundäre Amingruppen enthalten, wie sie in US 5,539,070 in Sp. 5, Z. 41 bis 53, US 5,106,928 in Sp. 2, Z. 29 bis 58 oder in US 5,686,544 in Sp. 7, Z. 29 bis Sp. 10, Z. 36 beschrieben sind. Diese beinhalten Ethanolamin, sekundäre Dialkyldiamine oder Polyoxyalkylenpolyamine, Aminterminierte Reaktionsprodukte von Diaminen und Verbindungen, die ein oder mehrere mit Aminen reaktive Gruppen aufweisen. Solche Verbindungen sind beispielsweise in der US 5,883,208 in Sp. 7, Z. 30 bis Sp. 8, Z. 56 offenbart. Mit Blick auf die in der US 5,883,208 offenbarten Reaktionsprodukte umfassen diese bevorzugt diprimären Amine wie Alkyl-diprimäre Amine, Aryl-diprimäre Amine, Alkylaryl-diprimäre Amine und Polyoxyalkylen-Diamine. Besonders bevorzugte Amine umfassen N-Octylamin, 1,6-Diaminohexan (1,6-Hexandiamin), Diethylamin, Dibutylamin, Diethylentriamin, Dipropylentriamin, 1,3-Propylendiamin (1,3-Propandiamin), 1,2-Propylendiamin, 1,2-Ethandiamin, 1,5-Pentandiamin, 1,12-Dodekandiamin, 2-Methyl-1,5-Pentandiamin, 3-Methyl-1,5-Pentandiamin, Triethylentetraamin und Diethylentriamin. Bevorzugte Polyoxyalkylenpolyamine umfassen Polyethylenoxiddiamin, Polypropylenoxiddiamin, Triethylenglycolpropylendiamin, Polytetramethylenoxiddiamin und Polyethylenoxidcopolypropylenoxiddiamin.

Das Amin im Organoboranaminkomplex liegt vorzugsweise in Form eines Alkyldiamins mit mindestens einer primären Aminogruppe vor, wobei es besonders bevorzugt ist, wenn die Alkylgruppe 2 bis 6 Kohlenstoffatome und insbesondere 2 bis 4 Kohlenstoffatome enthält.

In einer besonders bevorzugten Ausführungsform umfasst der Alkylboranaminkomplex ein Trialkylboran oder ein Alkylcycloalkylboran und das Amin umfasst ein primäres Amin, ein sekundäres Amin, ein Polyamin mit primären oder sekundären Aminogruppen oder beidem, Ammoniak, ein Polyoxyalkylenamin, das Reaktionsprodukt eines Diamins und einer difunktionellen Verbindung, die Gruppen aufweist, die mit Aminen reagieren, wobei das Reaktionsprodukt terminale Amingruppen aufweist, ein Arylamin, ein heterocyclisches Amin, eine Verbindung, die eine strukturelle Amidineinheit aufweist, einem aliphatischen Heterocyclus, der mindestens ein sekundäres Stickstoffatom im heterocyclischen Ring aufweist, wobei der Heterocyclus ein oder mehrere sekundäre oder tertiäre Stickstoffatome, Sauerstoffatome, Schwefelatome oder Doppelbindungen im Heterozyklus enthalten kann; alicyclische Verbindungen, die, gebunden an

den alicyclischen Ring, einen oder mehrere Substituenten aufweisen, die eine Amingruppe enthalten, konjugierte Imine oder Gemische davon.

Im Rahmen dieser Erfindung ganz besonders bevorzugte Alkylboranaminkomplexe sind der Triethylborandiaminopropankomplex, der Triethylborandiethylentriaminkomplex, der Tri-n-butylboranmethoxpropylaminkomplex, der Tri-n-butylborandiaminopropylaminkomplex, der Tri-sec-butyl-borandiaminopropan-komplex, der Methylaminoethoxydiethylborankomplex und der Methylaminoethoxydicyclohexylborankomplex. Von diesen ist der Tri-n-butylboranmethoxpropylaminkomplex im Rahmen der vorliegenden Erfindung am meisten bevorzugt.

Im Rahmen der vorliegenden Erfindung ist es bevorzugt, wenn die Zusammensetzung, umfassend das mindestens eine latente Alkylboran, einen pH-Wert von etwa 7 oder mehr, vorzugsweise einen pH-Wert von 7 bis 12, und insbesondere bevorzugt einen pH-Wert von 7 bis 10, aufweist.

Es ist zweckmäßig, wenn die Zusammensetzung, umfassend mindestens ein latentes Alkylboran, zusätzlich ein Lösungsmittel enthält, wobei dieses Lösungsmittel eine ausreichende Löslichkeit für das latente Alkylboran aufweisen muss, so dass dieser in dem Lösungsmittel in Lösung vorliegt. Besonders geeignete Lösungsmittel in Kombination mit latenten Alkylboranen gemäß der vorliegenden Erfindung sind u.a. Hexan, Heptan, Xylol, Ethylacetat oder Gemische davon. Aus toxikologischen Gesichtspunkten ist von diesen Ethylacetat am meisten bevorzugt.

Hinsichtlich der Konzentration des latenten Alkylborans in der Zusammensetzung unterliegt die vorliegende Erfindung keinen relevanten Beschränkungen. Es ist allein erforderlich, dass das latente Alkylboran in der Zusammensetzung mit einem Gehalt vorliegt, der eine merkliche Verbesserung der Verbindung des Substrats mit der radikalisch härtbaren Substanz bewirkt. Vorzugsweise liegt das latente Alkylboran in der Zusammensetzung mit einem Gehalt von etwa 0,05 bis 50 Gew.-%, insbesondere 1 Gew.-% bis 40 Gew.-%, besonders bevorzugt von etwa 2,5 bis 30 Gew.-%, und noch mehr bevorzugt von 2,5 bis 20 Gew.-%, und am meisten bevorzugt 5 bis 10 Gew.-% vor. Es hat sich gezeigt, dass bereits bei einer Menge von 2,5 Gew.-% an latenten Alkylboranen eine deutliche Verbesserung der Torsionsfestigkeit in MPa erzielt wird, während bei Mengen von 15 bis 30 Gew.-% die Ergebnisse nur unwesentlich besser sind als bei geringeren Konzentrationen des latenten Alkylborans.

Weiterhin hat sich gezeigt, dass der Zusatz eines radikalisch härtbaren Monomers zu dem latenten Alkylboran die Haftung zu dem Substrat weiter verbessern kann. Geeignete radikalisch härtbare Monomere sind in diesem Zusammenhang insbesondere (Meth)acrylate wie sie im Nachstehenden für die radikalisch härtbare Substanz beschrieben werden. Erforderlich ist es für diese (Meth)acrylate allein, dass sie keine dekomplexierenden Eigenschaften aufweisen, d.h. unter anderem keine Carboxylgruppen aufweisen, vorzugsweise flüssig sind und sich gut in dem Lösungsmittel für das latente Alkylboran lösen lassen. Besonders bevorzugte (Meth)acrylate sind beispielsweise Methacrylate wie Tetrahydrofurfurylmethacrylat, Amino-Methacrylate wie Dimethylaminoethylmethacrylat und Benzylmethacrylat. Ebenso können Mischungen der genannten (Meth)acrylate verwendet werden. Das Mengenverhältnis der zusätzlichen radikalisch härtbaren Monomere zu dem latenten Alkylboran (bezogen jeweils auf deren Gewicht) ist nicht entscheidend, liegt aber vorzugsweise im Bereich von 100:1 bis 1:5, insbesondere 10:1 bis 1:5, weiter bevorzugt 5:1 bis 1:5, noch mehr bevorzugt 3:1 zu 1:3 und am meisten bevorzugt zwischen 2:1 und 1:2. Bezogen auf die Menge des radikalisch härtbaren Monomers in der das latente Alkylboran enthaltenden Zusammensetzung ist es weiterhin bevorzugt, wenn die Gesamtmenge an radikalisch härtbaren Monomeren in der Zusammensetzung nicht mehr als 30 Gew.-%, insbesondere nicht mehr als 20 Gew.-% und besonders bevorzugt nicht mehr als 15 Gew.-% beträgt.

Im Rahmen der vorliegenden Erfindung hat es sich in Einzelfällen gezeigt, dass der Zusatz von Aminen zu dem latenten Alkylboran mit besonderen Vorteilen verbunden sein kann, insbesondere, wenn diese Amine die Aushärtung der radikalisch härtbaren Substanz begünstigen. So kann ein zusätzliches Amin beispielsweise mit einem in der radikalisch härtbaren Zusammensetzung verwendeten Peroxid oder Hydroperoxid reagieren und so die Aushärtung der radikalisch härtbaren Zusammensetzung beschleunigen. Geeignete Amine in diesem Zusammenhang sind beispielsweise aromatisch Anilin-Derivate, wie insbesondere N,N-Diethylanilin, hydroxyethylierte Aniline, wie N,N-bis-(2-hydroxyethyl)-p-Toluidin (Bisomer PTE) und halogenierte Derivate davon. Besonders geeignete Amine für die Verwendung mit Hydroperoxiden sind Amin-Aldehyd-Kondensationsprodukte wie z.B. 3,5-Diethyl-1,2-dihydro-1-phenyl-2-propylpyridin (DHP). Der Zusatz entsprechender Amine zu dem latenten Alkylboran kann daher die Haftung auf elastischen Substraten, wie EPDM oder SBR verbessern.

Wie vorstehend bereits erläutert, kann das latente Alkylboran durch ein Dekomplexierungsmittel aktiviert werden. Das Dekomplexierungsmittel kann in der Zusammensetzung, umfassend das mindestens eine latente Alkylboran, in einer separat aufzubringenden Zusammensetzung oder in dem radikalisch härtbaren Klebstoff enthalten sein. Vorzugsweise ist das Dekomplexierungsmittel jedoch nicht in der Zusammensetzung, umfassend das mindestens eine latente Alkylboran enthalten, da dies zu einer vorzeitigen Aktivierung des latenten Alkylborans führen kann und dieses somit ganz oder teilweise abgebaut werden würde. Daher sollte, falls das Dekomplexierungsmittel zusammen mit dem latenten Alkylboran aufgebracht wird, dieses erst kurz vor dem Aufbringen mit dem latenten Alkylboran vermischt werden. Es ist jedoch bevorzugt, wenn sich das Dekomplexierungsmittel in dem radikalisch härtbaren Klebstoff befindet, da dann eine Aktivierung des latenten Alkylborans erst bei dem Kontakt mit dem radikalisch härtbaren Klebstoff erfolgt. Es ist jedoch auch möglich, das Dekomplexierungsmittel als separate Komponente nach der Applikation des latenten Alkylborans auf die daraus resultierende Schicht aufzutragen, was eine zweite Vorbehandlung darstellt.

Es kann notwendig sein, die Aufspaltung des latenten Alkylborans zu erleichtern, indem die Zusammensetzung, umfassend das latente Alkylboran oder das Substrat, auf das diese aufgetragen wurde, auf eine gewisse Temperatur erhitzt wird.

Das Dekomplexierungsmittel umfasst oder besteht im Wesentlichen aus Mineralsäuren, organischen Säuren, Lewis-Säuren, Isocyanaten, Säurechloriden, Sulphonylchloriden, Aldehyden oder einer Kombination davon. Als Dekomplexierungsmittel geeignete organische Säuren sind beispielsweise Säuren gemäß der allgemeinen Formel R-COOH, wobei R Wasserstoff, eine Alkylgruppe mit 1 bis 20, vorzugsweise 1 bis 11, und besonders bevorzugt 1 bis 4 Kohlenstoffatomen oder eine Arylgruppe mit 6 bis 10, vorzugsweise 6 bis 8 Kohlenstoffatomen sein kann. Geeignet sind ebenfalls di-funktionelle Säuren, beispielsweise Maleinsäure oder Itaconsäure. Die Alkylgruppe kann ein geradkettiges oder verzweigtes Alkyl sein. Sie kann ungesättigt oder gesättigt sein. Beispielhafte Säuren umfassen Acrylsäure, Methacrylsäure, Essigsäure, Benzoesäure und p-Methoxybenzoesäure. Geeignete Lewis-Säuren sind beispielsweise $SnCl_4$, $TiCl_4$ und Ähnliche. Geeignete Mineralsäuren sind beispielsweise HCl, $H_2SO_4$, $H_3PO_4$ und Ähnliche. Weitere geeignete Dekomplexierungsmittel sind copolymerisierbare Dekomplexierungsmittel, wie beispielsweise Zink-Di(Meth)acrylat (beispielsweise erhältlich unter den Handelsnamen Dymalink 705 und Dymalink 708), Calcium-Di(Meth)acrylat, oder Hydroxyethyl(meth)acrylat-Phosphat (beispielsweise erhältlich unter den Handelsnamen Sartomer SR9051, 9050 oder 9054).

Im Rahmen der vorliegenden Erfindung hat sich die Verwendung von bifunktionellen Dekomplexierungsmitteln als besonders zweckmäßig erwiesen, die sowohl eine ungesättigte Einheit als auch eine Säurefunktion aufweisen. Über die Säurefunktion wirken solche Verbindungen als Dekomplexierungsmittel für das latente Alkylboran, während die ungesättigte Einheit ein Einbinden des Dekomplexierungsmittels in die radikalisch härtbare Substanz ermöglicht. Dadurch kann ein Austritt des Dekomplexierungsmittels über die Zeit aus der gehärteten Substanz unterbunden werden. Besonders geeignete Dekomplexierungsmittel sind in diesem Zusammenhang ungesättigte Carbonsäuren wie Acryl- oder Methacrylsäure, Itaconsäure, Maleinsäure oder Monoaddukte von hydroxyfunktionellen (Meth)acrylaten wie Hydroxyethylmethacrylat und Dicarbonsäuren oder deren Anhydriden wie z.B. Bernsteinsäureanhydrid.

Das Dekomplexierungsmittel kann in einer Konzentration vorliegen, die hoch genug ist damit zumindest ein Teil des in der Zusammensetzung enthaltenen latenten Alkylborans mit dem Dekomplexierungsmittel reagieren kann. Bevorzugt wird es in einer Menge zugesetzt, die mindestens etwa 20 mol.-%, besonders bevorzugt mindestens etwa 50 mol.-%, insbesondere mindestens etwa 80 mol.-%, und am meisten bevorzugt mindestens etwa 100 mol.-%, bezogen auf die molare Menge der organischen Borverbindung entspricht. Für im Rahmen einer Weiterverarbeitung aufzubringende Klebstoffe, die ihrerseits latente Alkylborane und Dekomplexierungsmittel enthalten, ist hierbei zu berücksichtigen, dass die Menge des im Klebstoff enthaltenen Dekomplexierungsmittels in der Regel auf die Menge des enthaltenen latenten Alkylborans abgestimmt ist. Dies hat zur Folge, das für eine Reaktion mit dem auf das Substrat aufgebrachten latenten Alkylboran keine ausreichende Menge an Dekomplexierungsmittel zur Verfügung steht, zumal latentes Alkylboran und Dekomplexierungsmittel schon vor dem Auftragen des Klebstoffs auf das Substrat miteinander vermischt werden und reagieren können. Für die Berechnung der vorstehenden Mol-% Angaben ist daher zunächst die Molmenge des im Klebstoff enthaltenen latentes Alkylborans von der Molmenge des Dekomplexierungsmittel abzuziehen, und die Dekomplexierungsmittelmenge anhand des auf das Substrat aufgebrachten latenten Alkylborans und diesem korrigierten Dekomplexierungsmittelgehalt zu berechnen.

Das Dekomplexierungsmittel kann beispielsweise in einer Konzentration von mehr als 0,05 Gew.-%, vorzugsweise mehr als 0,5 Gew.-%, besonders bevorzugt mehr als etwa 1 Gew.-%, und am meisten bevorzugt mehr als etwa 2 Gew.-%, bezogen auf das Gesamtgewicht der Zusammensetzung, vorliegen. Das Dekomplexierungsmittel kann andererseits in einer Konzentration von weniger als etwa 15 Gew.-%, vorzugsweise weniger als etwa 10 Gew.-%, weiter bevorzugt weniger als etwa 7 Gew.-%, und am meisten bevorzugt weniger als etwa 6 Gew.-%, basierend auf dem Gesamtgewicht der Zusammensetzung, vorliegen. Ebenso ist es möglich, Gemische von mehreren Dekomplexierungsmitteln einzusetzen, wobei das Gesamtgewicht aller Dekomplexierungsmittel in den vorstehend bezeichneten Bereichen liegt.

Hinsichtlich des Acrylat-basierten Klebstoffs unterliegt die vorliegende Erfindung keinen relevanten Beschränkungen. Bevorzugte Beispiele von Acrylaten und Methacrylaten umfassen Methyl(meth)acrylat, Butyl(meth)acrylat, tert-Butyl(meth)-acrylat, 2-Ethylhexyl(meth)acrylat, Ethyl(meth)acrylat, Isobornyl(meth)acrylat, Cyclohexyl(meth)acrylat, Benzyl(meth)acrylat, Phenoxyethyl(meth)acrylat, Lauryl(meth)acrylat, Hydroxyethyl(meth)acrylat, Glycidyl(meth)acrylat, Tetrahydrofurfuryl(meth)-acrylat, Alkoxytetrahydrofurfuryl(meth)acrylat (z.B. ethoxyliertes oder propoxyliertes Tetrahydrofurfuryl(meth)acrylat), Acrylamid, N-Methylacrylamid und Acetalgruppen enthaltende (Meth)acrylate wie Isopropylidengylcerol(meth)acrylat, Glycerolformal(meth)acrylat oder (5-Ethyl-1,3-dioxan-5-yl)methyl(meth)acrylat. Es hat sich gezeigt, dass (Meth)acrylate, die einen rein aliphatischen Alkylrest ausweisen, weniger günstige Haftungseigenschaften zeigen, als (Meth)acrylate mit nicht aliphatischen Bestandteilen wie Aromaten oder Ethergruppen. In einer besonders bevorzugten Ausführungsform enthält der Acrylat-basierten Klebstoffs daher nicht ausschließlich (Meth)acrylate mit nicht aliphatischen Bestandteilen. Speziell bevorzugte (Meth)acrylate, die im Acrylat-basierten Klebstoff enthalten sind, sind insbesondere Tetrahydrofurfuryl(meth)acrylat, Benzyl(meth)acrylat und Phenoxyethyl-(meth)acrylat. Die Zusammensetzung umfasst vorzugsweise ein, zwei oder mehrere der vorgenannten (Meth)acrylate.

Im Rahmen des vorstehend beschriebenen Verfahrens hat sich gezeigt, dass auf Trimethylcyclohexyl(meth)acrylat basierende Acrylatklebstoffe nur eine relativ geringfügige Verbesserung in der Haftung nach dem Auftrag eines latenten Alkylborans zeigen. Im Rahmen der vorliegenden Erfindung ist es daher bevorzugt, wenn der Acrylat-basierte Klebstoff nicht auf Trimethylcyclohexyl(meth)acrylat beruht, d.h. dass dieses (Meth)acrylat nicht den Hauptanteil (in Mol) der (Meth)acrylatbestandteile ausmacht. Vorzugsweise enthält der Acrylat-basierte Klebstoff Trimethylcyclohexyl(meth)-acrylat in einer maximalen Menge von 10 Gew.-%, vorzugsweise 5 Gew.-% und insbesondere 1 Gew.-% (bezogen jeweils auf das Gesamtgewicht der Zusammensetzung). In einer besonders bevorzugten Ausführungsform enthält der Acrylat-basierte Klebstoff kein Trimethylcyclohexyl(meth)acrylat.

Neben den vorhergehend beschriebenen (Meth)acrylatmonomeren kann der Acrylat-basierte Klebstoff weitere radikalisch polymerisierbare Bestandteile aufweisen. Beispielsweise sind dies vernetzende Monomere wie Allyl(meth)-acrylat oder vernetzende difunktionelle oder höher funktionelle (Meth)acrylate wie oligomere oder polymere Verbindungen der Formel (I).

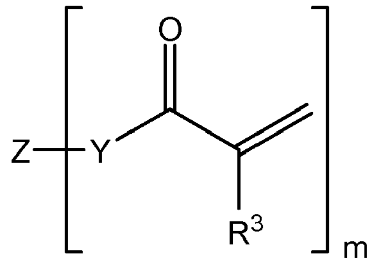

(I)

Der Rest $R^3$ steht dabei für ein Wasserstoffatom oder für eine Methylgruppe. Der Index m steht für einen Wert von 2 bis 5. Weiterhin steht Z für ein Polyol, insbesondere für ein Polyesterpolyol, ein Polycarbonatpolyol oder ein Polyetherpolyol, wie Polyethylen- oder Polypropylenglycol, nach Entfernung von m Hydroxylgruppen und Y steht für O oder für NR', wobei R' für einen Kohlenwasserstoffrest oder für ein Wasserstoffatom, bevorzugt für ein Wasserstoffatom, steht.

Die Verbindung der Formel (I) ist insbesondere ausgewählt aus der Gruppe bestehend aus Ethylenglykoldi(meth)acrylat, 1,3- und 1,4-Butandioldi(meth)-acrylat, 1,6-Hexandioldi(meth)acrylat, ethoxyliertem und propoxyliertem Neopentylglykoldi(meth)acrylat, propoxyliertem Glyceryltri(meth)acrylat, Trimethylolpropantri(meth)acrylat, Trimethylolpropandi(meth)acrylat, ethoxyliertem Trimethylolpropantri(meth)acrylat, modifiziertem Pentaerythritoltri(meth)acrylat, propoxyliertem ethoxyliertem Pentaerythritoltetra(meth)acrylat, Ditrimethylolpropantetra(meth)acrylat und Dipentaerythritolpenta(meth)acrylat. Insbesondere steht m in der Verbindung der Formel (I) für einen Wert von 2 und Z steht für ein polymeres Polyol nach Entfernung von zwei OH-Gruppen. Dieses polymere Polyol ist dabei insbesondere ein Polyalkylenpolyol, ein Polyoxyalkylenpolyol oder ein Polyurethanpolyol; ein polyhydroxyfunktionelles Ethylen-Propylen-Dien-, Ethylen-Butylen-Dien- oder Ethylen-Propylen-Dien-Copolymer; ein polyhydroxyfunktionelles Copolymer aus Dienen wie 1,3-Butandien oder Diengemischen und Vinylmonomeren wie Styrol, Acrylnitril oder Isobutylen; ein polyhydroxyfunktionelles Polybutadienpolyol; ein polyhydroxyfunktionelles Acrylonitril/Butadien-Copolymer; oder ein Polysiloxanpolyol.

Beispielsweise sind derartige di- oder trifunktionelle (Meth)acrylate ausgewählt aus der Gruppe bestehend aus Polyethylenglykoldi(meth)acrylat wie Diethylenglykoldi(meth)acrylat, Triethylenglykoldi(meth)acrylat, Tetraethylenglykoldi(meth)acrylat; Polypropylenglykoldi(meth)acrylat wie Dipropylenglykoldi(meth)acrylat, Tripropylenglykoldi(meth)acrylat; und Tris-(2-hydroxyethyl)-isocyanurattri(meth)acrylat.

Weiterhin geeignet ist Z ein Diphenol, insbesondere ein alkoxyliertes Diphenol, nach Entfernung von zwei OH-Gruppen, bevorzugt ethoxyliertes Bisphenol A. Beispielsweise ist ein derartiges difunktionelles (Meth)acrylat unter dem Handelsnamen Sartomer® SR 348 kommerziell erhältlich von der Firma Sartomer Company, Inc., USA.

Als weitere Bestandteile der radikalisch härtbaren Substanz geeignet sind beispielsweise auch difunktionelle (Meth)acrylate wie Epoxy(meth)acrylate, insbesondere Epoxy(meth)acrylate, welche aus der Umsetzung von Bisphenol-A-diglycidylether mit (Meth)acrylsäure erhältlich sind. Beispielsweise ist ein derartiges difunktionelles (Meth)acrylat unter dem Handelsnamen Sartomer® CN 104 kommerziell erhältlich von der Firma Sartomer Company, Inc., USA.

Ebenfalls verwendbar ist die Klasse der Vinyl-funktionalisierten Prepolymere. Dabei handelt es sich um Prepolymere, die terminal mit Vinylgruppen beispielsweise in Form von (Meth)acrylatgruppen funktionalisiert sind. Geeignete Vinyl-funktionalisierte Prepolymere basieren beispielsweise auf polyhydroxyterminierten Acrylnitril/Butadien-Copolymeren und werden typischerweise aus carboxylterminierten Acrylnitril/Butadien-Copolymeren, welche beispielsweise unter

dem Namen Hypro® CTBN von Emerald Performance Materials, LLC, USA, kommerziell erhältlich sind, und Epoxiden oder Aminoalkoholen hergestellt.

Derartige geeignete Vinyl-funktionalisierte Prepolymere der Formel (I) sind beispielsweise kommerziell erhältlich von der Firma Kraton Polymers, USA, oder unter den Handelsnamen Hypro® VTB und Hypro® VTBNX von der Firma Emerald Performance Materials, LLC, USA. Ein weiteres Beispiel für Vinyl-funktionalisierte Prepolymere sind Acrylat-gecappte Polybutadienpremolymere (beispielsweise Oligomere), die kommerziell beispielsweise von Emerald Performance Materials unter dem Handelsnamen Hypro erhältlich. Eine solche bevorzugte Verbindung ist Hypro™ VTB 2000X168.

Beim Vinyl-funktionalisierten Prepolymer kann es sich ebenso um ein Polyurethan(meth)acrylat handeln. Derartige Verbindungen sind typischerweise, in einer dem Fachmann bekannten Art und Weise, herstellbar aus der Reaktion von mindestens einem Polyisocyanat, insbesondere einem Diisocyanat, und einer (Meth)acrylsäure, einem (Meth)acrylamid oder einem (Meth)acrylsäureester, welcher eine Hydroxylgruppe oder Amingruppe aufweist. Gegebenenfalls kann das Diisocyanat vor der Umsetzung mit (Meth)acrylsäure, einem (Meth)acrylamid oder einem (Meth)acrylsäureester, welcher eine Hydroxylgruppe oder Amingruppe aufweist, mit mindestens einem Polyol, insbesondere einem Diol, in einem dem Fachmann bekannten Verfahren zu einem Isocyanatgruppen aufweisenden Polyurethanpolymer umgesetzt werden.

Zur Umsetzung mit den Isocyanatgruppen des Polyisocyanats eignen sich insbesondere Hydroxyalkyl(meth)acrylate wie Hydroxypropylacrylat (HPA), Hydroxypropylmethacrylat (HPMA), Hydroxybutylacrylat (HBA) oder Hydroxybutylmethacrylat (HBMA), bevorzugt Hydroxyethylacrylat (HEA) oder Hydroxyethylmethacrylat (HEMA), oder ein Monohydroxypoly(meth)acrylat eines Polyols, bevorzugt von Glycerin oder Trimethylolpropan.

Polyurethan(meth)acrylate können ebenfalls hergestellt werden durch Veresterung eines Hydroxylgruppen aufweisenden Polyurethanpolymers mit (Meth)acrylsäure.

Weiterhin können Polyurethan(meth)acrylate hergestellt werden durch die Umsetzung eines (Meth)acrylsäureesters, welches mindestens eine Isocyanatgruppe aufweist, mit einem Hydroxylgruppen aufweisenden Polyurethanpolymer oder mit einem Polyol, wie sie beispielsweise im vorliegenden Dokument beschrieben sind. Als (Meth)acrylsäureester, welches mindestens eine Isocyanatgruppe aufweist, eignet sich beispielsweise 2-Isocyanatoethylmethacrylat.

Als Polyisocyanate eignen sich handelsübliche Polyisocyanate, insbesondere Diisocyanate. Beispielsweise sind geeignete Diisocyanate 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Lysin- und Lysinesterdiisocyanat, Cyclohexan-1,3-diisocyanat, Cyclohexan-1,4-diisocyanat, 1-Isocyanato-3,3,5-trimethyl-5-isocyanatomethyl-cyclohexan (= Isophorondiisocyanat oder IPDI), Perhydro-2,4'-diphenylmethandiisocyanat und Perhydro-4,4'-diphenylmethandiisocyanat, 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3-xylylendiisocyanat, m- und p-Tetramethyl-1,4-xylylendiisocyanat, Bis-(1-Isocyanato-1-methylethyl)-naphthalin, 2,4- und 2,6-Toluylendiisocyanat (TDI), 4,4'-, 2,4'- und 2,2'-Diphenylmethandiisocyanat (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Oligomere und Polymere der vorgenannten Isocyanate, sowie beliebige Mischungen der vorgenannten Isocyanate.

Geeignete Polyole sind insbesondere Polyetherpolyole, Polyesterpolyole und Polycarbonatpolyole sowie Mischungen dieser Polyole. Beispielsweise sind geeignete Polyole aufgelistet als Polyole P in der europäischen Patentanmeldung EP 08169631.2, deren gesamte Offenbarung hiermit durch Bezugnahme eingeschlossen wird.

Bevorzugt ist das Polyol ein Diol, insbesondere Polyoxypropylendiol oder Polyoxybutylendiol. Am Meisten bevorzugt handelt es sich bei den Polyolen um möglichst unpolare Polyole.

Ein bevorzugtes Acrylat-gecapptes Polyurethanprepolymer ist CN 973J75 von Sartomer Company, Inc.

Weitere im Rahmen der vorliegenden Erfindung verwendbare Prepolymere sind solche, die aus Polyolen, wie beispielsweise Polypropylenglycol, Polyethylenglycol oder Polytetrahydrofuran hergestellt werden. Es ist auch möglich, Mischungen von verschiedenen Polyolen als Basis der Acrylatgecappten Prepolymere wie beispielsweise eine Mischung aus Polypropylenglycol und Polytetrahydrofuran oder aus Polytetrahydrofuran und Polyestern zu verwenden.

Bevorzugt handelt es sich beim Vinyl-funktionalisierten Prepolymer um ein Elastomer, insbesondere um ein Polyurethan(meth)acrylat und/oder ein vinylterminiertes Acrylonitril/Butadien-Copolymer.

Der radikalisch härtbare Klebstoff kann aus einer der vorgenannten Komponenten bestehen. Vorzugsweise umfasst der radikalisch härtbare Klebstoff jedoch eine Kombination von zwei, drei oder mehr Komponenten, die mit Hilfe einer radikalischen Polymerisation gehärtet werden können. Ohne an eine bestimmte Theorie gebunden zu sein, liefert die Verwendung von z.B. mehreren Acrylaten oder Methacrylaten Zusammensetzungen, die eine oder mehrere unterschiedliche vorteilhafte Eigenschaften aufweisen, wie beispielsweise unterschiedliche Benetzungseigenschaften, unterschiedliche Oberflächenenergien, unterschiedliche Reaktivitäten, unterschiedliche Klebstoffeigenschaften oder unterschiedliche Brucheigenschaften.

Es kann auch sinnvoll sein zusätzlich zu Acrylaten und/oder Methacrylaten weitere radikalisch härtbare Komponenten in den radikalisch härtbaren Klebstoff einzubeziehen, die nicht auf Acrylaten oder Methacrylaten beruhen. Solche zusätzlichen Komponenten können allgemein in Form von Monomeren, Oligomeren oder als Prepolymere zugesetzt werden. Solche Komponenten sind beispielsweise Styrol und alkylierte Styrol-Typen (z.B. Methylstyrol), Allyl-Verbindungen, Vinyl-Verbindungen, Methallyl-Verbindungen, etc. Es ist jedoch bevorzugt, wenn die Menge solcher zusätzlicher Monomeren im radikalisch härtbaren Klebstoff, wenn dieser im wesentlichen Acrylate oder Methacrylate enthält, weniger als etwa 40 %, insbesondere weniger als etwa 30%, besonders bevorzugt weniger als etwa 20 % und am meisten bevorzugt weniger als etwa 10 %, bezogen auf das Gesamtgewicht der radikalisch härtbaren Monomere im Acrylat-basierten Klebstoff, beträgt.

Die Menge von radikalisch härtbaren Bestandteilen, d.h von Monomeren und gegebenenfalls Oligomeren und/oder Prepolymeren, in dem radikalisch härtbaren Klebstoff, beträgt vorzugsweise etwa 10 Gew.-% oder mehr, besonders bevorzugt etwa 15 Gew.-% oder mehr, noch mehr bevorzugt etwa 20 Gew.-% oder mehr, und am meisten bevorzugt etwa 30 Gew.-% oder mehr auf Basis des Gesamtgewichts des radikalisch härtbaren Klebstoffs. Der Gehalt von Verbindungen, die durch freie radikalische Polymerisation polymerisiert werden können, beträgt vorzugsweise etwa 90 Gew.-% oder weniger, basierend auf dem gesamten radikalisch härtbaren Klebstoff, besonders bevorzugt etwa 85 Gew.-% oder weniger, und am meisten bevorzugt etwa 80 Gew.-% oder weniger. Bei Injektionsklebstoffen kann der Monomeranteil auch höher liegen, beispielsweise im Bereich von 90 bis 95 Gew.-%, bezogen auf das Gesamtgewicht des radikalisch härtbaren Klebstoffs.

In einem Beispiel, das jedoch nicht beschränkend für die vorliegende Erfindung sein soll, kann der radikalisch härtbare Klebstoff ein, zwei, drei oder vier Verbindungen, ausgewählt aus der Gruppe, bestehend aus Methyl(meth)acrylat, Tetrahydrofurfuryl(meth)acrylat, Lauryl(meth)acrylat, Benzyl(meth)acrylat, Phenoxyethyl(meth)acrylat, einem Acrylat oder Methacrylat, das einen Epoxidring aufweist, einem Acrylat oder Methacrylat, das eine Acetalgruppe aufweist, wie Isopropylidengylcerol(meth)acrylat, Glycerolformal-(meth)acrylat oder (5-Ethyl-1,3-dioxan-5-yl)methyl(meth)acrylat, und einem Acrylat- oder Methacrylat-gecappten Alkandien (beispielsweise Butadien) Prepolymer enthalten.

Der radikalisch härtbare Klebstoff kann ebenso einen oder mehrere Füllstoffe enthalten. In einer zweikomponentigen polymerisierbaren Zusammensetzung kann der Füllstoff in der ersten Komponente oder in der zweiten Komponente oder in beiden Komponenten enthalten sein. Es wurde beobachtet, dass Zusammensetzungen, die mehrere Füllstoffe enthalten, überraschend gute Klebefähigkeit zu den Substraten aufweisen.

Die Füllstoffe, die in der polymerisierbaren Zusammensetzung eingesetzt werden können, beinhalten Talk, Mika, Wollastonit, Calciumcarbonat, Bariumsulfat, Magnesiumcarbonat, Ton, Aluminiumdioxid, Siliziumdioxid, gebranntes Silica, Calciumsulfate, Kohlenstofffasern, Glasfasern, Metallfasern, Siliziumoxidsand, Aktivkohle, Titandioxid, Magnesiumhydroxid, Zeolith, Molybdän, Kieselgur, Sericit, weißen Sand, Calciumhydroxid, Calciumsulfit, Natriumsulfat, Bentonit, Graphit, Glaspartikel, Glasperlen, Nanopartikel aus Ton, Kaolinit, Illit, Smektit, Sepiolit, Vermitikulit, Pyrophylit, Sauconit, Saponit, Nontronit, Montmorillonit, Magnesiumaluminiumsilikat, Metallcarbonate, Feldspat, Mika, Quarz und Mischungen davon enthalten. Geeignete Füllstoffe können behandelt oder unbehandelt sein. Beispielhafte Füllstoffe beinhalten ohne Beschränkung Talk, Calciumcarbonat, gebranntes Silica, Ton oder eine Kombination davon. Mehrere dieser Füllstoffe können verwendet werden. Zum Beispiel kann die polymerisierbare Zusammensetzung gebranntes Silica und ein behandeltes (oder unbehandeltes) Calciumcarbonat enthalten.

Zusätzlich ist es möglich, organische Füllstoffe in die polymerisierbare Zusammensetzung einzubeziehen. Geeignete organische Füllstoffe sind beispielsweise solche, die elastomere oder schlagzähigkeitsverbessernde Eigenschaften aufweisen. Beispiele für solche Füllstoffe sind core-shell-Polymere, wie z.B. MBS oder AIM Typen, die beispielsweise unter den Handelsnamen Durastrength® oder Clearstrength® von Arkema, unter dem Handelsnamen Paraloid® von Dow Chemical, oder Blendex® von KaneAce erhältlich sind. Weitere verwendbare organische Füllstoffe sind Elastomere, beruhend auf SBS-Blockcopolymeren und Ähnlichem (beispielsweise erhältlich unter dem Handelsnamen Kraton), sowie chlorsulfonierte Polyethylene, die beispielsweise unter dem Handelsnamen Tosoh CSM erhältlich sind.

Der Füllstoff kann in einer Konzentration von etwa 0 Gew.-% oder mehr, vorzugsweise etwa 5 Gew.-% oder mehr, und besonders bevorzugt etwa 10 Gew.-% oder mehr, basierend auf dem Gesamtgewicht des Acrylat-basierten Klebstoffes, eingesetzt werden. Der Füllstoff kann in einer Konzentration von etwa 50 Gew.-% oder weniger, vorzugsweise etwa 40 Gew.-% oder weniger, besonders bevorzugt etwa 30 Gew.-% oder weniger, und am meisten bevorzugt etwa 25 Gew.-% oder weniger, basierend auf dem Gesamtgewicht der polymerisierbaren Zusammensetzung, eingesetzt werden. Beispielsweise kann der Füllstoff in einer Konzentration von etwa 0 Gew.-% bis 50 Gew.-%, vorzugsweise von etwa 5 Gew.-% bis etwa 40 Gew.-% und besonders bevorzugt von etwa 10 bis etwa 30 Gew.-%, basierend auf dem Gesamtgewicht der polymerisierbaren Zusammensetzung, vorliegen.

Anorganische Füllstoffe werden vorzugsweise in einer Menge von etwa 0 bis 40% in die polymerisierbare Zusammensetzung einbezogen, während organische Füllstoffe vorzugsweise in einer Menge im Bereich von 0 bis 50% in der polymerisierbaren Zusammensetzung enthalten sind.

Im Rahmen des vorstehend beschriebenen Verfahrens weist der einzubeziehende radikalisch härtbare Klebstoff und insbesondere der Acrylat-basierte Klebstoff zweckmäßig eine Offenzeit im Bereich von 3 bis 45 Minuten auf.

Unter Offenzeit wird hierbei die Zeit verstanden, innerhalb der der Klebstoff eine zur Verklebung ausreichende Benetzungseigenschaft für das oder die Substrat(e) aufweist.

Damit sich die Positionierung der Fugenbandenden bei den Fugenbandsubstraten (1) und (2) während der Verklebung nicht verändern kann, ist es zweckmäßig, diese Enden vor der Verklebung zu fixieren. Dazu können die Fugenbandenden z.B. in einer entsprechenden Haltevorrichtung eingespannt werden, die nach der Aushärtung des Klebstoffs entfernt werden kann.

Bei manchen radikalisch härtbaren Klebstoffen besteht zudem das Problem, dass die Polymerisierung der Monomere an der Oberfläche des Klebstoffes, die mit Luft in Kontakt steht, mit Nebenreaktionen, beispielsweise einer Einbindung von Sauerstoff in das entstehende Polymer, verbunden ist. Aus diesem Grund kommt es bei manchen radikalisch härtbaren Klebstoffen bei der Aushärtung unter Luftkontakt (und demzufolge dem Kontakt mit Sauerstoff) zur Ausbildung von "schmierigen" Oberflächen, die nicht vollständig durchgehärtet sind. Im Rahmen der vorliegenden Erfindung ist es daher bevorzugt, wenn die Verarbeitung und das Aushärten des Klebstoffs unter Sauerstoffausschluss erfolgt.

In einer besonders bevorzugten Ausführungsform wird dazu das Fugenbandsubstrat (1) und vorzugsweise ebenfalls das Fugenbandsubstrat (2) vor dem Aufbringen des Acrylat-basierten Klebstoffs mit einer luftdichten Umhüllung versehen. Ein Beispiel für eine entsprechende Umhüllung ist eine Manschette, die für die Zugabe des Klebstoffs einen Einlass sowie für das Austreten von in der Manschette befindlicher Luft einen Auslass aufweist. Der radikalisch härtbare Klebstoff wird anschließend in die luftdichte Umhüllung eingebracht, so dass er das Fugenbandsubstrat (1) und das Fugenbandsubstrat (2) kontaktieren kann, während ein Luftkontakt des Klebstoffs beispielsweise nur im Bereich des Auslasses und gegebenenfalls im Bereich des Einlasses der Manschette, in die der Klebstoff eingebracht wird, möglich ist. Nach der vollständigen Aushärtung kann die luftdichte Umhüllung wieder vom erhaltenen Klebeverbund entfernt werden. Da ein Kontaktieren bzw. Aufbringen der das latente Alkylboran enthaltenden Zusammensetzung erschwert ist, wenn die Fugenbandsubstrate mit einer luftdichten Umhüllung versehen sind, ist es zweckmäßig diese Zusammensetzung bereits vor dem Anbringen der luftdichten Umhüllung auf das oder die Fugenbandsubstrate aufzubringen.

Für das beschriebene Verfahren ist es zudem bevorzugt, wenn die Fugenbandenden der Fugenbandsubstrate (1) und (2) vor dem Aufbringen des radikalisch härtbaren Klebstoffs in einer Haltevorrichtung fixiert werden. Die im vorstehenden erwähnte Manschette ist dazu zweckmäßig so ausgelegt, dass neben der Bereitstellung einer luftdichten Umhüllung auch eine Fixierung der Fugenbandenden möglich ist.

Ein weiterer Aspekt der vorliegenden Erfindung betrifft verklebte Fugenbänder, die nach einem wie vorstehend erläuterten Verfahren erhältlich sind.

Die vorliegende Erfindung betrifft ebenfalls ein Fügesystem, das aus

i) einer Zusammensetzung, die mindestens ein latentes Alkylboran umfasst und im Wesentlichen frei von Dekomplexierungsmitteln für das latente Alkylboran ist, wie sie im vorstehenden beschrieben wurde, und
ii) einem radikalisch härtbaren Klebstoff besteht.

Für bevorzugte Ausführungsformen des latenten Alkylborans und des radikalisch härtbaren Klebstoffs gelten die vorstehend gemachten Angaben analog.

Ein weiterer Aspekt der vorliegenden Erfindung betrifft die Verwendung einer Zusammensetzung, die ein latentes Alkylboran, wie es im Vorstehenden beschrieben wurde, enthält, als Aktivator für die Verklebung von Fugenbändern, vorzugsweise von EPDM- und SBR-Fugenbändern. Für die Zusammensetzung gelten die vorstehend gemachten Ausführungen für bevorzugte Ausführungsformen des latenten Alkylborans analog.

Der Begriff "Aktivator" bedeutet in Zusammenhang mit der vorliegenden Erfindung, dass die Zusammensetzung für eine Vorbehandlung des Substrats eingesetzt wird und selbst im Wesentlichen frei von Dekomplexierungsmitteln ist. Der Aktivator hat in der Regel eine von einem Klebstoff abweichende Zusammensetzung. "Im Wesentlichen" ist, wie es vorstehend gebraucht wird, so aufzufassen, dass die Zusammensetzung weniger als etwa 5 Gew.-%, vorzugsweise weniger als etwa 2 Gew.-%, und besonders bevorzugt keine Dekomplexierungsmittel enthält.

Im Zusammenhang mit den vorstehend beschriebenen Verfahren, den verklebten Fugenbändern und der bezeichneten Verwendung hat es sich überraschend gezeigt, dass eine Vorbehandlung von PVC-Substraten mit Zusammensetzungen, die mindestens ein latentes Alkylboran enthalten und im Wesentlichen frei von Dekomplexierungsmitteln für das latente Alkylboran sind, nicht zwangsläufig erforderlich ist. Demzufolge umfasst die vorliegende Anmeldung auch ein Verfahren zur Verbindung von PVC-Fugenbändern, das a) das Aufbringen eines radikalisch härtbaren Klebstoffs auf das PVC-Fugenbandsubstrat (1), b) das Inkontaktbringen des Fugenbandsubstrats (1) aus a) mit einem Fugenbandsubstrat (2) derart, dass der radikalisch härtbare Klebstoff zwischen den beiden Substraten angeordnet ist, sowie c) das Aushärtenlassen des Acrylatklebstoffs unter Bildung einer Kompositstruktur umfasst, ohne dass dieses Verfahren das Aufbringen einer Zusammensetzung, die mindestens ein latentes Alkylboran umfasst und im Wesentlichen frei von Dekomplexierungsmitteln für das latente Alkylboran ist, auf das Fugenbandsubstrat (1) einbezieht. Besonders bevorzugte radikalisch härtbare Klebstoffe sind in diesem Zusammenhang Acrylat-basierte Klebstoffe und insbesondere Methyl(meth)acrylat, Tetrahydrofurfuryl(meth)acrylat, Benzyl-(meth)acrylat, Isopropylidengylcerol(meth)acrylat, Glycerolformal(meth)acrylat oder (5-Ethyl-1,3-dioxan-5-yl)methyl(meth)acrylat basierte Klebstoffe, d.h. Klebstoffe, die bezogen auf die Gesamtmenge an radikalisch härtbaren Monomeren 35 Gew.-% oder mehr, bevorzugt 50 Gew.-% oder mehr der angegebenen (Meth)acrylate enthalten. Am meisten bevorzugt sind in diesem Zusammenhang Methylmethacrylat basierte Klebstoffe.

Analog erfasst die vorliegende Erfindung auch entsprechend verklebte Fugenbänder.

Durch die vorstehende Erfindung wird ein einfaches und kostengünstiges Verfahren zur Verfügung gestellt, mit dem es möglich ist, Fugenbänder, insbesondere solche aus ansonsten schwer zu verklebenden Materialien wie EPDM oder SBR zu verkleben. Im Gegensatz zum Stand der Technik ist dieses Verfahren mit den Vorteilen verlängerter Offenzeiten, verkürzter Aushärtungszeiten und verbesserter Lagerstabilitäten der eingesetzten Klebstoffe verbunden. Weiterhin können für die Verklebung kommerziell erhältliche Klebstoffe verwendet werden, so dass die Verklebung der genannten Materialien auf kostengünstige Art und Weise möglich ist.

Darüber hinaus wurde überraschend gefunden, dass die durch das beschriebene Verfahren erhaltenen Klebeverbindungen eine überaus gute Beständigkeit der Verklebung selbst bei Lagerung in stark alkalischen Lösungen wie frischem Beton oder Betonporenflüssigkeit aufweisen. Diese Beobachtung ist insbesondere für Acrylat-basierte Klebstoffe mit einem signifikanten Anteil an Acrylatestern nicht naheliegend, da diese bei hohen pH-Werten verseifen, so dass es in der Folge zu einem Versagen der Verklebung oder zumindest zu einer deutlichen Verminderung der Verbundfestigkeiten kommt.

Ein weiterer Aspekt der vorliegenden Erfindung betrifft daher ein Verfahren zum Abdichten eines Bauwerks umfassend a) das Aufbringen einer Zusammensetzung, die mindestens ein latentes Alkylboran umfasst und im Wesentlichen frei von Dekomplexierungsmitteln für das latente Alkylboran ist, auf ein Fugenbandsubstrat (1), b) das Aufbringen eines radikalisch härtbaren Klebstoffs auf das mit dem latenten Alkylboran vorbehandelte Fugenbandsubstrat (1), c) das Inkontaktbringen des Fugenbandsubstrats (1) aus b) mit einem Fugenbandsubstrat (2) derart, dass der radikalisch härtbare Klebstoff zwischen den beiden Substraten angeordnet ist, d) das Aushärtenlassen des radikalisch härtbaren Klebstoffs unter Bildung einer Kompositstruktur, und e) das Inkontaktbringen der verklebten Fugenbandkompositstruktur mit flüssigem Beton, frischem Beton oder Betonporenflüssigkeit.

Im Folgenden wird die vorliegende Erfindung anhand einiger illustrativer Beispiele beschrieben, die in irgendeiner Weise als maßgeblich für den Schutzumfang der Anmeldung anzusehen sind.

<u>Beispiel 1</u>

Eine Zusammensetzung aus 90 Gewichtsteilen Ethylacetat und 10 Gewichtsteilen Tri-n-Butylboran/Methoxypropylamin Komplex (BASF) wurde auf verschiedene Fugenbandsubstrate aufgebracht. Für die Messung wurde die Zusammensetzung mit Hilfe eines Pinsels aufgetragen. Nach dem Auftrag der Zusammensetzung und Ablüften für einen Zeitraum von 15 bis 30 Min verblieb der Alkylboranamin-Komplex in einer Schichtdicke von etwa 2 μm auf dem Substrat. Anschließend wurde der Klebstoff (SikaFast 5211 NT) in einer Schichtdicke wie unten angegeben auf die behandelte Fläche aufgetragen. Dieser Klebstoff enthält als Dekomplexierungsmittel Calciumdimethacrylat.

Als Substrate kamen ein PVC-Substrat (AF-600 der Firma Sika), ein EPDM-Substrat (FPK 350 der Firma Sika Tricosal Illertissen) sowie ein SBR-Substrat (der Firma extrutec Gummi GmbH) zum Einsatz.

Die mechanischen Eigenschaften der Verklebung wurden mit folgenden Prüfvorschriften bestimmt.

<u>T-peel</u>

Der T-Peeltest wurde in Anlehnung an die DIN EN 14173 bei einer Prüfgeschwindigkeit von 100 mm/min durchgeführt. Als Substrate wurden Streifen des jeweiligen Materials mit folgenden Dimensionen verwendet: Länge 150 mm, Breite 40 mm, Höhe 4 mm (PVC), 5 mm (EPDM) bzw. 6 mm (SBR). Der Klebstoff wurde in einer Dicke von 0,3 mm aufgetragen.

<u>Zugscherfestigkeit</u>

Die Zugscherfestigkeit wurde in Anlehnung an die DIN EN 1465 bei einer prüfgeschwindigkeit von 10 mm/min bestimmt.

Als Substrate wurden Streifen des jeweiligen Materials mit folgenden Dimensionen verwendet: Länge 100 mm, Breite 25 mm, Höhe 4 mm (PVC), 5 mm (EPDM) bzw. 6 mm (SBR). Der Klebstoff wurde in einer Dicke von 1,5 mm aufgetragen.

Zugfestigkeit

Die Zugfestigkeit wurde in Anlehnung an die DIN EN ISO 527 bei einer Prüfgeschwindigkeit von 100 mm/min bestimmt.

Als Substrate wurden Streifen des jeweiligen Materials mit folgenden Dimensionen verwendet: Länge 70 mm, Breite 25 mm, Höhe 4 mm (PVC), 5 mm (EPDM) bzw. 6 mm (SBR). Der Klebstoff wurde in einer Dicke von 1,0 mm aufgetragen.

Für die unterschiedlichen Proben wurden die Eigenschaften nach Aushärtung des Klebstoffs (initial), sowie nach 7 Tagen Lagerung in Wasser und gesättigtem Calciumhydroxid bei jeweils 23 °C bestimmt. Zusätzlich wurde der Anteil (in %) an Substratbruch (SB), kohäsivem Versagen (KB) und adhäsivem Versagen (AB) visuell bestimmt. Die Ergebnisse der Messungen sind in den folgenden Tabellen 1 bis 3 angegeben.

Tabelle 1

| **EPDM** | | | |
|---|---|---|---|
| | | Ohne Boranaktivator | Mit Boranaktivator |
| **T-Peel** | | | |
| | Initial | 5,9<br>70%SB | 8,9<br>70%SB |
| | 7 d in Wasser/23°C | 11,3<br>100%SB | 11,9<br>100%SB |
| | 7 d in ges. $Ca(OH)_2$/23°C | 11,6<br>100%SB | 8,3<br>100%SB |
| **Zugscherfestigkeit** | | | |
| | Initial | 2,8<br>100%SB | 3,4<br>100%SB |
| **Zugfestigkeit** | | | |
| | Initial | 4,6<br>50%SB/50%AB | 5,6<br>100%SB |
| | 7 d in Wasser/23°C | 4,0<br>100%SB | 5,6<br>100%SB |
| | 7 d in ges. $Ca(OH)_2$/23°C | 4,0<br>100%SB | 5,1<br>100%SB |

Tabelle 2

| **PVC** | | | |
|---|---|---|---|
| | | Ohne Boranaktivator | Mit Boranaktivator |
| **T-Peel** | | | |
| | Initial | 2,5<br>100%KB | 2,1<br>100%KB |
| **Zugscherfestigkeit** | | | |
| | Initial | 4,1<br>100%SB | 4,3<br>70%SB/30%KB |
| **Zugfestigkeit** | | | |
| | Initial | 6,2<br>100%AB | 6,7<br>100%AB |

Tabelle 3

| SBR | | | |
|---|---|---|---|
| | | Ohne Boranaktivator | Mit Boranaktivator |
| **T-Peel** | | | |
| | Initial | 0,1<br>100%AB | 9,9<br>100%SB |
| | 7 d in Wasser/23°C | 0,0<br>100%AB | 10,3<br>100%SB |
| | 7 d in ges. $Ca(OH)_2$/23°C | 0,0<br>100%AB | 10,0<br>100%SB |
| **Zugscherfestigkeit** | | | |
| | Initial | 0,1<br>100%AB | 4,5<br>100%SB |
| **Zugfestigkeit** | | | |
| | Initial | 0,0<br>100%AB | 2,6<br>60%SB/40%AB |
| | 7 d in Wasser/23°C | 0,0<br>100%AB | 1,3<br>100%AB |
| | 7 d in ges. $Ca(OH)_2$/23°C | 0,0<br>100%AB | 2,2<br>100%AB |

Beispiel 2

Zusammensetzungen mit verschiedenen Gehalten an Organoboranaminkomplexen werden hinsichtlich einer Verklebung von NBR- und SBR-Kautschuken mit dem Klebstoff Sika Fast®-5211NT (beruhend auf Tetrahydrofurfurylmethacrylat) untersucht. Für die Testverbindung wird ein NBR bzw. SBR-Substrat mit einer Haftvermittlerzusammensetzung, umfassend verschiedene Mengen an Triethylboran-Diaminopropankomplex (gelöst in Heptan) behandelt. Für die Messung wurde der Haftvermittler mit Hilfe eines Pinsels aufgetragen. Nach dem Auftrag des Haftvermittlers und Ablüften für einen Zeitraum von 15 bis 30 min verblieb dieser mit Schichtdicke von etwa 2 μm auf dem Substrat. Anschließend wird der Klebstoff in einer Schichtdicke von 1 mm auf die behandelte Fläche aufgetragen. Die Torsionsfestigkeit der Verklebung wurde mit folgender Prüfvorschrift bestimmt:

Zunächst wurde ein runder Aluminiumprüfkörper (kranzförmig, Aussendurchmesser 25 mm; Innendurchmesser 15 mm) mit Schleifpapier 60-100 aufgerauht. In diesen Prüfköper wurde anschließend ein runder PTFE Spacer eingesetzt, der über den Prüfköper hinausragt und dazu dient, eine Klebstoffdicke von 1 mm einzustellen. Dann wurde der vorgemischte Klebstoff auf die Aluminiumform aufgetragen. Die Aluminiumform wurde anschließend mit der Klebstoffsseite auf ein Substrat gedrückt, sodass der Klebstoff im Bereich der Aluminiumform abzüglich des Spacers angeordnet war. Mit Hilfe eines Spatels wurde überschüssiger Klebstoff, der beim Aufsetzen des Prüfkörpers auf das Substrat aus der Fuge herausgepresst worden ist, entfernt. Nach Aushärten des Klebstoffs über 24h bei 23 °C und 50 % relativer Luftfeuchtigkeit wurde auf dem Aluminiumprüfkörper eine Schraube befestigt, die als Gegenstück und Angriffspunkt für die Testmaschine dient. Danach wurde die Torsionsfestigkeit mit Hilfe der Testmaschine bestimmt, wobei das Testgerät das Drehmoment beim Nachgeben der Klebeverbindung misst, aus der die Torsionsfestigkeit berechnet wird. Die angegebenen Werte entsprechen dem Mittelwert aus drei Einzelmessungen.

Die Ergebnisse sind in Tabelle 4 wiedergegeben:

Tabelle 4

| | | Konzentrationsreihe Boran-Aktivator (TEB-DAP) → | | | | | | | |
|---|---|---|---|---|---|---|---|---|---|
| NBR gelb Kautschu k | Vorbe- handlung | BO 0 % | BO 2,5 % | BO 5 % | BO 10 % | BO 15 % | BO 20 % | BO 25 % | ADPrep |
| | Klebstoff | 5211NT | 5211NT | 5211NT | 5211NT | 5211NT | 5211NT | 5211NT | 5211NT |
| | Torsions- festigkeit [MPa] | 0,42 | 5,88 | 5,32 | 6,92 | 6,31 | 4,83 | 6,35 | 0,33 |
| | | | | | | | | | |
| SBR Schwarz Kautschu k | Vorbe- handlung | BO 0 % | BO 2,5 % | BO 5 % | BO 10 % | BO 15 % | BO 20 % | BO 25 % | ADPrep |
| | Klebstoff | 5211NT | 5211NT | 5211NT | 5211NT | 5211NT | 5211NT | 5211NT | 5211NT |
| | Torsions- festigkeit [MPa] | 1,57 | 3,92 | 3,97 | 4,18 | 3,93 | 2,48 | 2,91 | 1,42 |

BO = Boran-Komplex gelöst in Heptan, Angabe in Gewichtsprozent

TEB-DAP = Triethylboran-Diaminopropan-Komplex

ADPrep = Sika® ADPrep (Standard Primer für 2K-Acrylatklebstoffe)

5211NT = SikaFast®-5211NT

Es zeigt sich, dass bereits mit Mengen von 2,5 Gew.-% an Triethylboran-Diaminopropankomplex im Primer eine wesentliche Verbesserung der Torsionsfestigkeit des Klebstoffs gegenüber der Behandlung mit einem Standardprimer, der aus verschiedenen monomerischen Acrylaten und Dihydroxybenzol sowie Isopropanol bestand, erzielt werden kann.

**Patentansprüche**

1. Verfahren zum Verbinden von Fugenbändern, umfassend

   a) das Aufbringen einer Zusammensetzung, die mindestens ein latentes Alkylboran umfasst und im Wesentlichen frei von Dekomplexierungsmitteln für das latente Alkylboran ist, auf ein Fugenbandsubstrat (1),
   b) das Aufbringen eines radikalisch härtbaren Klebstoffs auf das mit dem latenten Alkylboran vorbehandelte Fugenbandsubstrat (1),
   c) das Inkontaktbringen des Fugenbandsubstrats (1) aus b) mit einem Fugenbandsubstrat (2) derart, dass der radikalisch härtbare Klebstoff zwischen den beiden Substraten angeordnet ist, und
   d) das Aushärtenlassen des radikalisch härtbaren Klebstoffs unter Bildung einer Kompositstruktur.

2. Verfahren nach Anspruch 1, **dadurch gekennzeichnet, dass** es sich bei dem Fugenbandsubstrat (1) und/oder (2) um ein PVC, EPDM, NBR- oder SBR-Substrat, oder ein Substrat aus Gemischen dieser Materialien, und bevorzugt um ein EPDM, NBR- oder SBR-Substrat handelt.

3. Verfahren nach Anspruch 1 oder 2, **dadurch gekennzeichnet, dass** der radikalisch härtbare Klebstoff ein Acrylat-basierter Klebstoff, bevorzugt mit einer Offenzeit im Bereich von 3 bis 45 Minuten ist.

**4.** Verfahren gemäß einem der Ansprüche 1 bis 3, **dadurch gekennzeichnet, dass** der radikalisch härtbare Klebstoff ein oder mehrere Monomere ausgewählt aus Tetrahydrofurfuryl(meth)acrylat, Benzyl(meth)acrylat oder Phenoxyethyl(meth)acrylat enthält.

**5.** Verfahren gemäß einem der Ansprüche 1 bis 4, **dadurch gekennzeichnet, dass** die Zusammensetzung, die das latente Alkylboran umfasst, zusätzlich ein (Meth)acrylat-Monomer enthält.

**6.** Verfahren gemäß einem der Ansprüche 1 bis 5, **dadurch gekennzeichnet, dass** die Zusammensetzung, umfassend mindestens ein latentes Alkylboran, einen pH-Wert von etwa 7 oder mehr aufweist.

**7.** Verfahren gemäß einem der Ansprüche 1 bis 6, **dadurch gekennzeichnet, dass** die Zusammensetzung, umfassend mindestens ein latentes Alkylboran, weiterhin ein Lösungsmittel, vorzugsweise ausgewählt aus Hexan, Heptan, Xylol, Ethylacetat oder Gemischen davon, enthält.

**8.** Verfahren gemäß einem der Ansprüche 1 bis 7, **dadurch gekennzeichnet, dass** die Konzentration des mindestens einen latenten Alkylborans in der Zusammensetzung etwa 2,5 bis 30 Gew.-%, vorzugsweise etwa 2,5 bis 20 Gew.-%, beträgt.

**9.** Verfahren gemäß einem der Ansprüche 1 bis 8, **dadurch gekennzeichnet, dass** das latente Alkylboran in Form eines Trialkylboranaminkomplexes vorliegt, in dem die Alkylgruppen gleich oder verschieden sind und 1 bis 11, vorzugsweise 2 bis 4 Kohlenstoffe, aufweisen.

**10.** Verfahren gemäß Anspruch 9, **dadurch gekennzeichnet, dass** das Amin im Trialkylboranaminkomplex in Form eines Alkylamins mit mindestens einer primären Aminogruppe vorliegt, in dem die Alkylgruppe vorzugsweise 2 bis 11, besonders bevorzugt 2 bis 4 Kohlenstoffatome, enthält und Ethersauerstoffe enthalten kann.

**11.** Verfahren nach einem der vorstehenden Ansprüche, **dadurch gekennzeichnet, dass** das Fugenbandsubstrat (1) und vorzugsweise ebenfalls das Fugenbandsubstrat (2) vor dem Aufbringen des radikalisch härtbaren Klebstoffs mit einer luftdichten Umhüllung versehen wird, der radikalisch härtbare Klebstoff in diese luftdichte Umhüllung eingebracht wird und die Fugenbandenden der Fugenbandsubstrate (1) und (2) vor dem Aufbringen des radikalisch härtbaren Klebstoffs in einer Haltevorrichtung fixiert werden.

**12.** Verklebtes Fugenband, erhältlich nach einem Verfahren gemäß einem der Ansprüche 1 bis 11.

**13.** Füge-System, bestehend aus

i) einer Zusammensetzung, die mindestens ein latentes Alkylboran umfasst und im Wesentlichen frei von Dekomplexierungsmitteln für das latente Alkylboran ist, wie sie in den Ansprüchen 1 und 5 bis 10 beschrieben wurde, und
ii) einem radikalisch härtbaren Klebstoff.

**14.** Verwendung einer Zusammensetzung, die mindestens ein latentes Alkylboran umfasst und im Wesentlichen frei von Dekomplexierungsmitteln für das latente Alkylboran ist, für die Aktivierung von Fugenbändern zur Verklebung mit radikalisch härtbaren Klebstoffen, vorzugsweise von EPDM-, NBR- oder SBR- Fugenbändern.

**15.** Verfahren zum Abdichten eines Bauwerks umfassend

a) das Aufbringen einer Zusammensetzung, die mindestens ein latentes Alkylboran umfasst und im Wesentlichen frei von Dekomplexierungsmitteln für das latente Alkylboran ist, auf ein Fugenbandsubstrat (1),
b) das Aufbringen eines radikalisch härtbaren Klebstoffs auf das mit dem latenten Alkylboran vorbehandelte Fugenbandsubstrat (1),
c) das Inkontaktbringen des Fugenbandsubstrats (1) aus b) mit einem Fugenbandsubstrat (2) derart, dass der radikalisch härtbare Klebstoff zwischen den beiden Substraten angeordnet ist,
d) das Aushärtenlassen des radikalisch härtbaren Klebstoffs unter Bildung einer Kompositstruktur, und
e) das Inkontaktbringen der verklebten Fugenbandkompositstruktur mit flüssigem Beton, frischem Beton oder Betonporenflüssigkeit.

Europäisches Patentamt
European Patent Office
Office européen des brevets

# EUROPÄISCHER RECHERCHENBERICHT

Nummer der Anmeldung
EP 15 17 1397

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | EP 1 176 170 A1 (HUBER & SUHNER AG [CH]) 30. Januar 2002 (2002-01-30) * Absätze [0001], [0011], [0025]; Ansprüche 1,11,18 * ----- | 1-15 | INV. C09J5/02 C09J4/00 E04B1/68 |
| Y | EP 1 029 906 A2 (MINNESOTA MINING & MFG [US]; ADHESIVE RESEARCH AND MANUFACT [RU]) 23. August 2000 (2000-08-23) * Absätze [0054], [0059] - [0061]; Ansprüche 1-10; Beispiel 76 to 110 * ----- | 1-15 | |
| A | DE 103 36 565 A1 (HENKEL KGAA [DE]) 26. Februar 2004 (2004-02-26) * das ganze Dokument * ----- | 1-15 | |
| | | | RECHERCHIERTE SACHGEBIETE (IPC) |
| | | | C09J E04B |

Der vorliegende Recherchenbericht wurde für alle Patentansprüche erstellt

1

| Recherchenort | Abschlußdatum der Recherche | Prüfer |
|---|---|---|
| München | 6. November 2015 | Sperry, Pascal |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 15 17 1397

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-11-2015

| Im Recherchenbericht angeführtes Patentdokument | Datum der Veröffentlichung | Mitglied(er) der Patentfamilie | Datum der Veröffentlichung |
|---|---|---|---|
| EP 1176170 A1 | 30-01-2002 | AT 322520 T | 15-04-2006 |
| | | DK 1176170 T3 | 14-08-2006 |
| | | EP 1176170 A1 | 30-01-2002 |
| | | ES 2261128 T3 | 16-11-2006 |
| | | US 2002035204 A1 | 21-03-2002 |
| EP 1029906 A2 | 23-08-2000 | KEINE | |
| DE 10336565 A1 | 26-02-2004 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 20030226472 A, Kneafsey
- US 20040068067 A, Kneafsey
- US 6630555 B, Kendall
- US 7247596 B, Jialanella
- US 5539070 A
- US 5106928 A
- US 5686544 A
- US 5883208 A
- EP 08169631 A